# EUROPEAN PATENT SPECIFICATION

(11) **EP 4 588 790 B1**
(45) Date of publication and mention of the grant of the patent: **18.02.2026**
(21) Application number: 24152065.9
(22) Date of filing: 16.01.2024
(51) Int. Cl.: B64C 1/14, B64D 15/10

(54) **AIRCRAFT AND METHOD FOR REMOVING ICE FROM THE RELATIVE WINDSHIELD OR FOR PREVENTING THE FORMATION OF ICE ON THE WINDSHIELD ITSELF**
FLUGZEUG UND VERFAHREN ZUM ENTFERNEN VON EIS VON DER WINDSCHUTZSCHEIBE ODER ZUM VERHINDERN DER BILDUNG VON EIS AUF DER WINDSCHUTZSCHEIBE
AÉRONEF ET PROCÉDÉ POUR ÉLIMINER LA GLACE DU PARE-BRISE RELATIF OU POUR EMPÊCHER LA FORMATION DE GLACE SUR LE PARE-BRISE LUI-MÊME

(43) Date of publication of application: 23.07.2025
(73) Proprietor: Leonardo S.p.a., 00195 Roma (IT)
(72) Inventor: DE DOMENICO, Francesco, 21017 SAMARATE (VA) (IT)
(74) Representative: Studio Torta S.p.A.

(56) References cited:
- WO-A2-2007/046106
- US-A1- 2004 045 587
- US-A1- 2019 375 377

## Description

The present invention relates to an aircraft and to a method for removing ice from the relative windshield or for preventing the formation of ice on the windshield itself.

The aircraft comprise in a known manner a fuselage defining a pilot cockpit and a windshield engaging an opening of the fuselage frontally to the pilot cockpit.

Temperature conditions close to or below zero degrees centigrade favour the formation of ice on the windshield. The visibility for the crew is thus reduced and there is therefore a risk to the flight safety of the aircraft.

In a known way, the windshields of the aircraft have heating systems, which are adapted to prevent the formation of ice on the windshield or remove the ice already formed on the windshield itself. With particular reference to the helicopters, these heating systems introduce optical distortions in the field of vision of the pilot if the windshield is made of polycarbonate. These heating systems, on the other hand, introduce fragilities of the windshield itself if they are made of glass.

The need to overcome at least one of the aforesaid drawbacks associated with the windshields of known type specified above is therefore felt in the sector.

Aim of the present invention is to realize a helicopter which allows to satisfy the need specified above in a simple and economical way.

US-A-2004/045587 and WO-A-2007/046106 disclose an aircraft according to the preamble of claim 1 and a method for removing ice from or for preventing the formation of ice on a windshield for an aircraft according to the preamble of claim 6.

US-A-2019/375337 discloses a windshield cleaning assembly for a vehicle includes a wiper that is operationally coupled to a wiper motor of a vehicle. A pipe is coupled to the wiper and extends from proximate to opposing ends of a blade of the wiper. The pipe has a first end that is closed. A pump is coupled to the vehicle is operationally coupled to an electrical circuit of the vehicle. A tank is coupled to the vehicle and is fluidically coupled to the pump. The tank is configured to position a fluid. A tube is fluidically coupled to and extends between the pump and a second end of the pipe. The pump is positioned to selectively pump the fluid from the tank through the tube and the pipe. The fluid exits the pipe under pressure through a plurality of holes to clean the windshield.

According to the invention, this aim is achieved by an aircraft as claimed in claim 1.

The present invention also relates to a method for removing ice from or for preventing the formation of ice on a windshield of an aircraft, according to what is claimed in claim 6.

For a better understanding of the present invention, a preferred non-limiting embodiment is described, by way of example only and with the aid of the accompanying drawings, wherein:
- Figure 1 is a perspective view of a helicopter realized according to the dictates of the present invention; and
- Figure 2 is a schematic front view of some details of the helicopter of Figure 1.

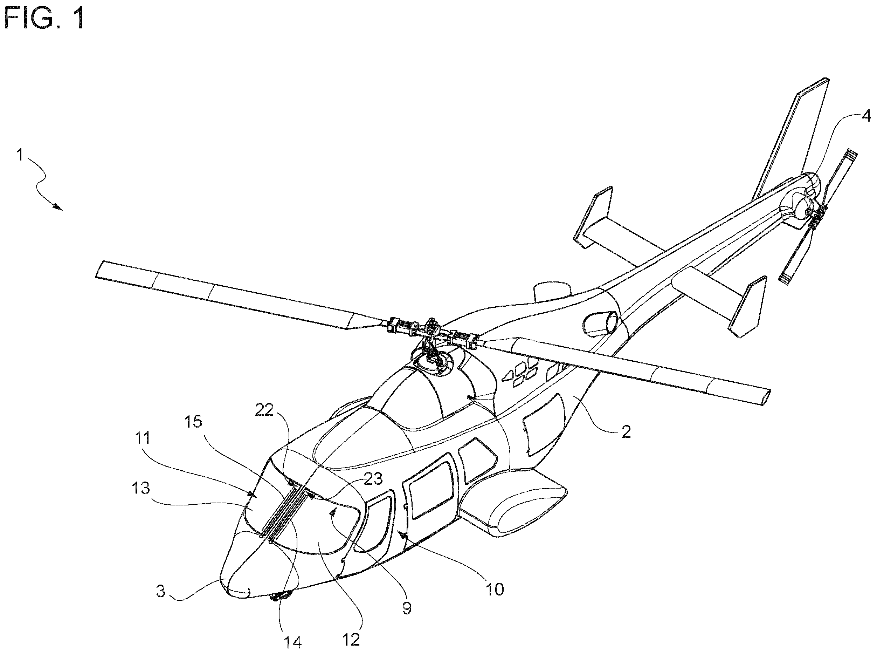

With reference to Figure 1, 1 denotes a helicopter.

The helicopter 1 essentially comprises:
- a fuselage 2 with a nose 3 arranged anteriorly and a tail 4 opposite the nose 3;
- a pilot cockpit 10 arranged at the nose 3 of the fuselage 2; and
- a windshield 11 engaging an opening 9 of the fuselage 2 arranged anteriorly to the pilot cockpit 10.

The windshield 11 is divided into two portions 12, 13 which are flanked with one another sideways.

The portions 12, 13 comprise respective end edges 22, 23 facing and parallel to each other.

The helicopter 1 further comprises:
- a tank 20 filled with a cleaning liquid;
- a pair of windscreen wipers 14, 15 provided, each one, with a respective plurality of nozzles 16, 17 fluidically connected to the tank 20 and which can be commanded to supply the cleaning fluid on the windshield 11; and
- a control unit 30 programmed to fluidically connect the tank 20 and the nozzles 16, 17 or to fluidically isolate the tank 20 and the nozzles 16, 17 from each other.

In particular, each windscreen wiper 14, 15 is provided to distribute the cleaning liquid on the respective portion 12, 13 of the windshield 11.

In the case shown, the axes A, B are arranged at respective end edges 22, 23 of the portions 12, 13.

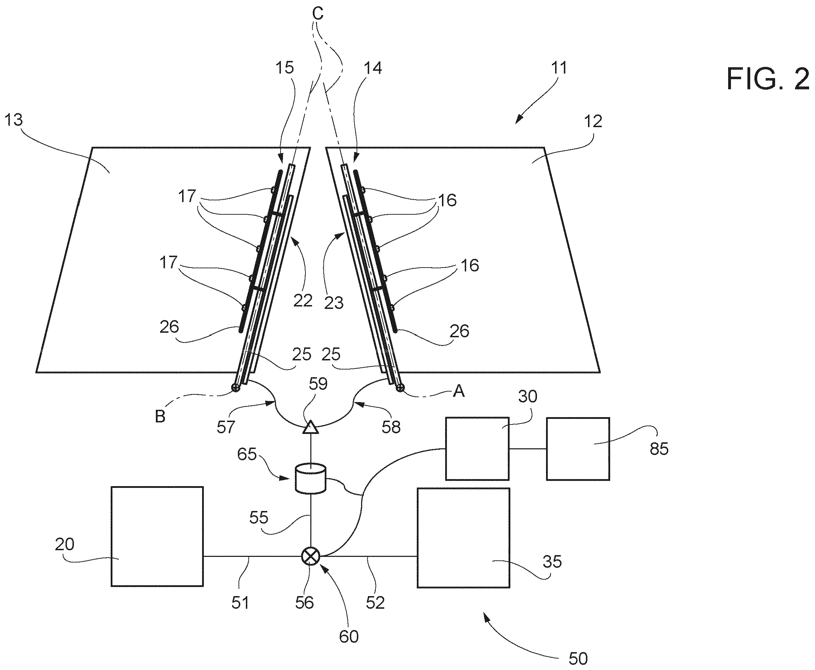

With reference to Figure 2, each windscreen wiper 14, 15 comprises, in turn:
- a brush 25 adapted to interact with the relative portion 12, 13 of the windshield; and
- a distributor 26 protruding cantilevered from the brush 25 and provided with nozzles 16, 17.

The positions of the nozzles 16, 17 along the respective extension axes C are, in the case shown, optimised according to the geometric characteristics of the windshield 11.

Helicopter 1 further comprises a tank 35 filled with an anti-icing/de-icing liquid and fluidically connected with the nozzles 16, 17;
the control unit 30 is programmed to determine a flow of anti-icing liquid from the tank 35 to the windshield 11 through the nozzles 16, 17.

In greater detail, the helicopter 1 comprises a circuit 50 adapted to selectively supply the anti-icing/de-icing liquid from the tank 35 to the nozzles 16, 17 or the cleaning liquid from the tank 20 to the nozzles 16, 17.

In greater detail, the circuit 50 comprises, in turn:
- a pair of conduits 51, 52 fluidically connected respectively with the respective tanks 20, 35;
- a conduit 55 fluidically connected to both conduits 51, 52 at a junction 56; and
- a pair of conduits 57, 58 fluidically connected with the conduit 55 at a junction 59 and with the nozzles 16, 17 of respective windscreen wipers 14, 15.

In particular, the conduits 57, 58 comprise, in turn:
- respective first portions external to the corresponding windscreen wipers 14, 15 and extending starting from the junction 59; and
- respective second portions fixed to the respective brushes 25 of corresponding windscreen wipers 14, 15, extending between the respective brushes 25 and the corresponding distributors 26, and ending in the respective nozzles 16, 17 of the corresponding distributors 26.

The circuit 50 further comprises:
- a valve 60 interposed along conduit 55; and
   - a pump 65 also interposed along the conduit 55.

More precisely, the valve 60 and the pump 65 are interposed in sequence along the conduit 55 between the junctions 56, 59.

The control unit 30 controls the valve 60 so as to selectively shift it:
- a first operating configuration wherein it fluidically connects the conduit 55 and the tank 20 full of cleaning liquid, and it fluidically isolates the conduit 55 and the tank 35 full of anti-icing/de-icing liquid;
- a second configuration wherein it fluidically isolates the conduit 55 and the tank 20 full of cleaning fluid, and it fluidically connects the conduit 55 and the tank 35 full of anti-icing/de-icing fluid; and
- a third operating configuration wherein it fluidically isolates both the tank 20 and the tank 35 from the conduit 55.

In particular, in the first operating configuration of the valve 60, the nozzles 16, 17 eject the cleaning liquid onto the windshield 11.

In the second operating configuration of the valve 60, the windscreen wipers 14, 15 eject via the nozzles 16, 17 the anti-icing/de-icing liquid onto the windshield 11.

In the third operating configuration of the valve 60, the windscreen wipers 14, 15 do not eject either the cleaning liquid or the anti-icing/de-icing liquid onto the windshield 11.

The pump 65 can be commanded to cause the advancement of the anti-icing/de-icing liquid present within the conduit 55.

The helicopter 1 further comprises a sensor 85 adapted to detect the presence of ice on the windshield 11 and to measure the temperature outside the helicopter 1, and to generate a signal in the event that ice is detected on the windshield 11 and the temperature outside the helicopter 1 is lower than a threshold value.

The control unit 30 is functionally connected with the sensor 85 and is programmed to shift the valve 60 into the second operating configuration when the sensor 85 generates the signal.

The helicopter 1 further comprises a heating system (not shown) which can be commanded by the control unit 30 to heat the windscreen wipers 14, 15 and the nozzles 16, 17 and prevent their blocking.

The operation of the helicopter 1 is described below starting from a condition wherein the control unit 30 places the valve 60 in the third configuration.

In such a condition, the nozzles 16, 17 are fluidically isolated from the tanks 20, 35. Consequently, the nozzles 16, 17 do not supply either the cleaning liquid or the anti-icing/de-icing liquid onto the windshield 11.

In case it is wished to clean the windshield 11, the crew operates a special command (not shown) of the pilot cockpit 10.

The control unit 30 receives such a command in input and shifts the valve 60 into the first configuration, wherein the cleaning liquid tank 20 is fluidically connected with the conduit 55, and the conduit 55 is fluidically isolated from the tank 35 full of anti-icing/de-icing liquid.

The pump 65 causes the advancement of the cleaning liquid along the conduits 51, 55 and 57, 58 up to the nozzles 16, 17. The nozzles 16, 17 eject the cleaning liquid onto the windshield 11, causing the cleaning thereof. Optionally, the crew operates the windscreen wipers 14, 15 to cause the rotation thereof around the relative axes A, B so as to evenly distribute the cleaning liquid on the windshield 11.

If the sensor 85 generates the signal associated with the presence of ice on the windshield 11 and the fact that the temperature outside the helicopter is lower than a threshold value or in case the crew operates a special further command of the pilot cockpit 10, the control unit 30 shifts the valve 60 into the second operating configuration.

The valve 60 in the second operating configuration fluidically isolates the conduit 55 from the tank 20 full of cleaning fluid, and it fluidically connects the conduit 55 and the tank 35 full of anti-icing/de-icing liquid.

The pump 65 causes the advancement of the cleaning liquid along the conduits 52, 55 and 57, 58 up to the nozzles 16, 17. The nozzles 16, 17 eject the anti-icing/de-icing liquid onto the windshield 11. The ice is thus removed from the windshield 11 and/or its formation is prevented.

Also in this case, the crew optionally operates the windscreen wipers 14, 15, to cause the rotation thereof around the relative axes A, B so as to evenly distribute the anti-icing/de-icing liquid on the windshield 11.

The control unit 30 preferably also commands the heating system so as to heat the windscreen wipers 14, 15 and the nozzles 16, 17 and prevent their blocking.

From an examination of the helicopter 1 according to the present invention, the advantages that it allows obtaining are evident.

In particular, the tank 35 filled with anti-icing/deicing liquid is fluidically connected with the same nozzles 16, 17 to which the tank 20 filled with the cleaning liquid is connected.

It is thus possible to use the same nozzles 16, 17 and also the same conduit 55 of the hydraulic circuit 50 to channel both the cleaning liquid and the anti-icing/de-icing fluid on the windshield 11.

In this way, it is possible to ensure the correct visibility to the crew, reducing the need for additional dedicated devices with respect to the windscreen wipers 14, 15 and the nozzles 16, 17 already present in the helicopter 1, unlike the solutions based on the heating of the windshield 11 of known type and discussed in the introductory part of the present description.

Moreover, it is possible to use the already normally provided movement of the windscreen wipers 14, 15 on the windshield 11 to evenly distribute the cleaning liquid on the windshield 11 itself.

Thanks to the fact that the anti-icing/de-icing liquid is ejected by the nozzles 16, 17, it is possible to apply the solution according to the invention to a windshield 11 also made of polycarbonate and without introducing optical distortions in the field of vision of the pilot.

Moreover, the windscreen wipers 14, 15 are not only effective in distributing the anti-icing/de-icing liquid on the windshield 11, but they also remove the residues of melted ice and of the aforesaid liquid from the windshield 11 itself.

By providing the nozzles 16, 17 according to predetermined geometries, it is furthermore possible to:
- improve the distribution of the anti-icing/de-icing liquid on the windshield 11; and/or
- increase the amount of the surface of the windshield 11 protected from ice formation and/or from which the ice can be removed.

The heating system allows to prevent the formation of ice and/or to remove ice also from the windscreen wiper 13, 14 and from the relative movement structures, raising the final safety of the helicopter 1.

It is clear that the helicopter 1 and the method described and shown herein may be subject to modifications and variations without thereby departing from the scope of protection defined by the claims.

In particular, the helicopter 1 could be an airplane, a convertiplane or another type of aircraft.

The cleaning liquid and/or the anti-icing/de-icing liquid could be replaced respectively by a cleaning fluid and/or by an anti-icing/de-icing fluid.

## Claims

1. Aircraft (1) comprising:
- a pilot cockpit (10);
- a windshield (11) delimiting said cockpit (10);
- at least one windscreen wiper (14, 15) comprising a plurality of nozzles (16, 17);
- a first tank (20) filled with a cleaning fluid and fluidically connected with said nozzles (16, 17);
- a control unit (30) programmed to determine, in use, a flow of said cleaning fluid from said first tank (20) towards said windshield (11) and through said nozzles (16, 17); and
- a second tank (35) filled with an anti-icing/deicing fluid and fluidically connected with said nozzles (16, 17);
said control unit (30) being programmed to determine, in use, a flow of said anti-icing/de-icing fluid from said second tank (35) towards said windshield (11) and through said nozzles (16, 17);
said aircraft (1) further comprising:
- a first and a second conduit (51, 52) fluidically connected respectively with said first tank (20) and said second tank (35);
- a third conduit (55) fluidically connected with said nozzles (16, 17);
- a valve (60) controllable by said control unit (30) and selectively shiftable between:
a first operating configuration wherein it fluidically connects said first and third conduit (51, 55), and fluidically isolates said second and third conduit (52, 55); and
a second operating configuration wherein it fluidically connects said second and third conduit (52, 55), and it fluidically isolates said first and third conduit (51, 55);
- a pump (65) interposed along said third conduit (55) and which can be commanded to cause the advancement of said cleaning fluid or anti-icing/de-icing fluid present, in use, in said third conduit (55); and
- a heating system which can be commanded by said control unit (30) to supply heat against said windscreen wipers (14, 15) and said nozzles (16, 17) and prevent their blocking;
**characterized in that** the aircraft further comprises
- a heating system which can be commanded by said control unit (30) to supply heat against said windscreen wipers (14, 15) and said nozzles (16, 17) and prevent their blocking; and
- a sensor (85) adapted to detect the presence of ice on said windshield (11) and to generate a signal in the event that ice is detected on said windshield (11);
said control unit (30) being operatively connected with said valve (60) and said sensor (85), and being programmed to shift said valve (60) from said first configuration to said second configuration, when said sensor (85) generates said signal.

2. Aircraft according to claim 1, **characterized in that** it comprises:
- at least two said windscreen wipers (14, 15);
- at least two fourth conduits (57, 58) fluidically connected, each one, to a respective said windscreen wiper (14, 15), and fluidically connected to said third conduit (55);
said valve (60) and said pump (65) being arranged in sequence along said third conduit (55) in a position interposed between said first and second conduit (51, 52), and said fourth conduits (57, 58).

3. Aircraft according to claim 2, **characterized in that** said windshield (11) comprises a first and a second portion (12, 13); each windscreen wiper (14, 15) being hinged to said windshield (11) around a relative axis (A, B) so as to be movable on a relative first or second portion (12, 13) of said windshield (11).

4. Aircraft according to any one of the preceding claims, **characterized in that** it is a helicopter.

5. Aircraft according to any of the foregoing claims, **characterized in that** said sensor (85) is adapted to measure a surrounding environment temperature and to generate said signal also in the event that said temperature of the surrounding environment is lower than a threshold value.

6. Method for removing ice from or for preventing the formation of ice on a windshield (11) of an aircraft (1); said aircraft (1) comprising:
- a pilot cockpit (10);
- a windshield (11) delimiting said cockpit (10);
- at least one windscreen wiper (14, 15) comprising a plurality of nozzles (16, 17);
- a first tank (20) filled with a cleaning fluid and fluidically connected with said nozzles (16, 17); and
- a second tank (35) filled with an anti-icing/deicing fluid and fluidically connected with said nozzles (16, 17); and
- a sensor (85) adapted to detect the presence of ice on said windshield (11);
said method comprising steps:
i) of channelling a flow of said cleaning fluid from said first tank (20) towards said windscreen (11) and through said nozzles (16, 17);
ii) of channelling a flow of anti-icing/de-icing fluid from a second tank (35) towards said windscreen (11) and through said nozzles (16, 17);
iii) shifting a valve (60) between:
a first operating configuration wherein it fluidically connects a first conduit (51) connected to said first tank (20) and a second conduit (55) fluidically connected to said nozzles (16, 17), and it fluidically isolates a third conduit (52) connected to said second tank (35) and said second conduit (55); and
a second operating configuration wherein it fluidically isolates said first and second conduit (51, 55), and it fluidically connects said third and second conduit (52, 55);
iv) commanding a pump (65) interposed along said second conduit (55) to cause the advancement of said cleaning fluid or anti-icing/de-icing fluid present, in in said second conduit (55); and
v) heating said windscreen wipers (14, 15) and said nozzles (16, 17) and prevent their blocking;
**characterized in that** it comprises the steps of:
vi) generating , by said sensor (85), a signal associated with the presence of ice on said windshield (11); and
vii) shifting said valve (60) from said first configuration to said second configuration, when said signal is generated.

7. Method according to claim 6, **characterized by** comprising a step viii) of generating said signal also associated with the temperature of the environment surrounding said aircraft (1) being lower than a threshold value.

## Patentansprüche

1. Luftfahrzeug (1), das umfasst:
- ein Pilotencockpit (10);
- eine Windschutzscheibe (11), die das Cockpit (10) begrenzt;
- wenigstens einen Windschutzscheiben-Scheibenwischer (14, 15), der mehrere Düsen (16, 17) umfasst;
- einen ersten Tank (20), der mit einem Reinigungsfluid gefüllt ist und mit den Düsen (16, 17) fluidtechnisch verbunden ist;
- eine Steuereinheit (30), die programmiert ist, in Gebrauch eine Strömung des Reinigungsfluids aus dem ersten Tank (20) in Richtung der Windschutzscheibe (11) und durch die Düsen (16, 17) zu bestimmen; und
- einen zweiten Tank (35), der mit einem Vereisungsschutz-/Enteisungsfluid gefüllt ist und mit den Düsen (16, 17) fluidtechnisch verbunden ist;
wobei die Steuereinheit (30) programmiert ist, in Gebrauch eine Strömung des Vereisungsschutz-/Enteisungsfluids aus dem zweiten Tank (35) in Richtung der Windschutzscheibe (11) und durch die Düsen (16, 17) zu bestimmen;
wobei das Luftfahrzeug (1) ferner umfasst:
- eine erste und eine zweite Leitung, die mit dem ersten Tank (20) bzw. dem zweiten Tank (35) fluidtechnisch verbunden sind;
- eine dritte Leitung (55), die mit den Düsen (16, 17) fluidtechnisch verbunden ist;
- ein Ventil (60), das durch die Steuereinheit (30) steuerbar ist und wahlweise umschaltbar ist zwischen:
einer ersten Betriebskonfiguration, in der es die erste und die dritte Leitung (51, 55) fluidtechnisch verbindet und die zweite und die dritte Leitung (52, 55) fluidtechnisch isoliert; und
einer zweiten Betriebskonfiguration, in der es die zweite und die dritte Leitung (52, 55) fluidtechnisch verbindet und es die erste und die dritte Leitung (51, 55) fluidtechnisch isoliert;
- eine Pumpe (65), die entlang der dritten Leitung (55) eingefügt ist und der befohlen werden kann, die Förderung des Reinigungsfluids oder des Vereisungsschutz-/Enteisungsfluids, das in Gebrauch in der dritten Leitung (55) vorhanden ist, zu verursachen; und
- ein Heizsystem, dem durch die Steuereinheit (30) befohlen werden kann, dem Windschutzscheiben-Scheibenwischer (14, 15) und den Düsen (16, 17) Wärme zuzuführen und deren Blockieren zu verhindern;
**dadurch gekennzeichnet, dass** das Luftfahrzeug ferner umfasst:
- einen Sensor (85), der dafür ausgelegt ist, das Vorhandensein von Eis auf der Windschutzscheibe (11) zu detektieren und in dem Fall, in dem Eis auf der Windschutzscheibe (11) detektiert wird, ein Signal zu erzeugen;
wobei die Steuereinheit (30) mit dem Ventil (60) und dem Sensor (85) betriebstechnisch verbunden ist und programmiert ist, das Ventil (60) aus der ersten Konfiguration in die zweite Konfiguration umzuschalten, wenn der Sensor (85) das Signal erzeugt.

2. Luftfahrzeug nach Anspruch 1, **dadurch gekennzeichnet, dass** es umfasst:
- wenigstens zwei Windschutzscheiben-Scheibenwischer (14, 15);
- wenigstens zwei vierte Leitungen (57, 58), wovon jede mit einem entsprechenden Windschutzscheiben-Scheibenwischer (14, 15) fluidtechnisch verbunden ist und die mit der dritten Leitung fluidtechnisch verbunden sind;
wobei das Ventil (60) und die Pumpe (65) entlang der dritten Leitung (55) nacheinander an einer Position angeordnet sind, die zwischen der ersten und der zweiten Leitung (51, 52) und den vierten Leitungen (57, 58) eingefügt ist.

3. Luftfahrzeug nach Anspruch 2, **dadurch gekennzeichnet, dass** die Windschutzscheibe (11) einen ersten und einen zweiten Abschnitt (12, 13) umfasst; jeder Windschutzscheiben-Scheibenwischer (14, 15) an der Windschutzscheibe (11) um eine relative Achse (A, B) angelenkt ist, so dass er an einem relativen ersten oder zweiten Abschnitt (12, 13) der Windschutzscheibe (11) beweglich ist.

4. Luftfahrzeug nach einem der vorhergehenden Ansprüche, **dadurch gekennzeichnet, dass** es ein Hubschrauber ist.

5. Luftfahrzeug nach einem der vorhergehenden Ansprüche, **dadurch gekennzeichnet, dass** der Sensor (85) dafür ausgelegt ist, eine Temperatur der umgebenden Umwelt zu messen und das Signal außerdem in dem Fall zu erzeugen, in dem diese Temperatur der umgebenden Umwelt tiefer als ein Schwellenwert ist.

6. Verfahren zum Entfernen von Eis von einer oder zum Verhindern der Bildung von Eis auf einer Windschutzscheibe (11) eines Luftfahrzeugs (1); wobei das Luftfahrzeug (1) umfasst:
- ein Pilotencockpit (10);
- eine Windschutzscheibe (11), die das Cockpit (10) begrenzt;
- wenigstens einen Windschutzscheiben-Scheibenwischer (14, 15), der mehrere Düsen (16, 17) umfasst;
- einen ersten Tank (20), der mit einem Reinigungsfluid gefüllt ist und mit den Düsen (16, 17) fluidtechnisch verbunden ist; und
- einen zweiten Tank (35), der mit einem Vereisungsschutz-/Enteisungsfluid gefüllt ist und mit den Düsen (16, 17) fluidtechnisch verbunden ist; und
- einen Sensor (85), der dafür ausgelegt ist, das Vorhandensein von Eis auf der Windschutzscheibe (11) zu detektieren;
wobei das Verfahren die folgenden Schritte umfasst:
i) Kanalisieren einer Strömung des Reinigungsfluids aus dem ersten Tank (20) in Richtung der Windschutzscheibe (11) und durch die Düsen (16, 17);
ii) Kanalisieren einer Strömung des Vereisungsschutz-/Enteisungsfluids aus einem zweiten Tank (35) in Richtung der Windschutzscheibe (11) und durch die Düsen (16, 17);
iii) Umschalten eines Ventils (60) zwischen:
einer ersten Betriebskonfiguration, in der es eine erste Leitung (51), die mit dem ersten Tank (20) verbunden ist, und eine zweite Leitung (55), die mit den Düsen (16, 17) fluidtechnisch verbunden ist, fluidtechnisch verbindet und es eine dritte Leitung (52), die mit dem zweiten Tank (35) verbunden ist, und die zweite Leitung (55) fluidtechnisch isoliert; und
einer zweiten Betriebskonfiguration, in der es die erste und die zweite Leitung (51, 55) fluidtechnisch isoliert und es die dritte und die zweite Leitung (52, 55) fluidtechnisch verbindet;
iv) Befehlen einer Pumpe (65), die entlang der zweiten Leitung (55) eingefügt ist, die Förderung des Reinigungsfluids oder des Vereisungsschutz-/Enteisungsfluids, das in Gebrauch in der zweiten Leitung (55) vorhanden ist, zu bewirken; und
v) Erwärmen der Windschutzscheiben-Scheibenwischer (14, 15) und der Düsen (16, 17) und Verhindern ihres Blockierens;
**dadurch gekennzeichnet, dass** es die Schritte umfasst:
vi) Erzeugen durch den Sensor (85) eines Signals, das dem Vorhandensein von Eis auf der Windschutzscheibe (11) zugeordnet ist; und
vii) Umschalten des Ventils (60) aus der ersten Konfiguration in die zweite Konfiguration, wenn das Signal erzeugt wird.

7. Verfahren nach Anspruch 6, **dadurch gekennzeichnet, dass** es einen Schritt viii) des Erzeugens des Signals umfasst, das außerdem der Temperatur der das Luftfahrzeug (1) umgebenden Umwelt zugeordnet ist, die tiefer als ein Schwellenwert ist.

## Revendications

1. Aéronef (1) comprenant :
- un poste de pilotage (10) ;
- un pare-brise (11) délimitant ledit poste de pilotage (10) ;
- au moins un essuie-glace (14, 15) comprenant une pluralité de gicleurs (16, 17) ;
- un premier réservoir (20) rempli d'un liquide de nettoyage et relié fluidiquement auxdits gicleurs (16, 17) ;
- une unité de commande (30) programmée pour déterminer, lors de l'utilisation, un écoulement dudit fluide de nettoyage depuis ledit premier réservoir (20) vers ledit pare-brise (11) et à travers lesdits gicleurs (16, 17) ; et
- un deuxième réservoir (35) rempli d'un fluide d'antigivrage/de dégivrage et relié fluidiquement auxdits gicleurs (16, 17) ;
ladite unité de commande (30) étant programmée pour déterminer, lors de l'utilisation, un écoulement dudit fluide d'antigivrage/de dégivrage depuis ledit deuxième réservoir (35) vers ledit pare-brise (11) et à travers lesdits gicleurs (16, 17) ;
ledit aéronef (1) comprenant en outre :
- un premier et un deuxième conduit (51, 52) reliés fluidiquement respectivement audit premier réservoir (20) et audit deuxième réservoir (35) ;
- un troisième conduit (55) relié fluidiquement auxdits gicleurs (16, 17) ;
- une vanne (60) pouvant être commandée par ladite unité de commande (30) et commutée sélectivement entre :
une première configuration de fonctionnement dans laquelle elle relie fluidiquement lesdits premier et troisième conduits (51, 55), et isole fluidiquement lesdits deuxième et troisième conduits (52, 55) ; et
une deuxième configuration de fonctionnement dans laquelle elle relie fluidiquement lesdits deuxième et troisième conduits (52, 55), et isole fluidiquement lesdits premier et troisième conduits (51, 55) ;
- une pompe (65) interposée le long dudit troisième conduit (55) et qui peut être commandée pour faire avancer ledit fluide de nettoyage ou fluide d'antigivrage/de dégivrage présent, lors de l'utilisation, dans ledit troisième conduit (55) ; et
- un système de chauffage qui peut être commandé par ladite unité de commande (30) pour fournir de la chaleur contre lesdits essuie-glaces (14, 15) et lesdits gicleurs (16, 17), et éviter leur blocage ;
**caractérisé en ce que** l'aéronef comprend en outre :
- un capteur (85) adapté pour détecter la présence de glace sur ledit pare-brise (11) et pour générer un signal en cas de détection de glace sur ledit pare-brise (11) ;
ladite unité de commande (30) étant reliée fonctionnellement à ladite vanne (60) et audit capteur (85), et étant programmée pour commuter ladite vanne (60) de ladite première configuration vers ladite deuxième configuration, lorsque ledit capteur (85) génère ledit signal.

2. Aéronef selon la revendication 1, **caractérisé en ce qu'**il comprend :
- au moins deux desdits essuie-glaces (14, 15) ;
- au moins deux quatrièmes conduits (57, 58) reliés fluidiquement, chacun, à un essuie-glace respectif parmi lesdits essuie-glaces (14, 15), et reliés fluidiquement audit troisième conduit (55) ;
ladite vanne (60) et ladite pompe (65) étant agencées en séquence le long dudit troisième conduit (55) dans une position interposée entre lesdits premier et deuxième conduits (51, 52), et lesdits quatrièmes conduits (57, 58).

3. Aéronef selon la revendication 2, **caractérisé en ce que** ledit pare-brise (11) comprend une première et une deuxième partie (12, 13) ; chaque essuie-glace (14, 15) étant articulé sur ledit pare-brise (11) autour d'un axe relatif (A, B) de manière à pouvoir se déplacer sur une première ou deuxième partie relative (12, 13) dudit pare-brise (11).

4. Aéronef selon l'une quelconque des revendications précédentes, **caractérisé en ce qu'**il s'agit d'un hélicoptère.

5. Aéronef selon l'une quelconque des revendications précédentes, **caractérisé en ce que** ledit capteur (85) est adapté pour mesurer une température d'environnement ambiant et pour générer ledit signal également dans le cas où ladite température d'environnement ambiant est inférieure à une valeur seuil.

6. Méthode pour enlever la glace d'un pare-brise (11) d'un aéronef (1) ou prévenir la formation de glace sur celui-ci ; ledit aéronef (1) comprenant :
- un poste de pilotage (10) ;
- un pare-brise (11) délimitant ledit poste de pilotage (10) ;
- au moins un essuie-glace (14, 15) comprenant une pluralité de gicleurs (16, 17) ;
- un premier réservoir (20) rempli d'un liquide de nettoyage et relié fluidiquement auxdits gicleurs (16, 17) ; et
- un deuxième réservoir (35) rempli d'un fluide d'antigivrage/de dégivrage et relié fluidiquement auxdits gicleurs (16, 17) ; et
- un capteur (85) adapté pour détecter la présence de glace sur ledit pare-brise (11) ;
ladite méthode comprenant les étapes consistant à :
i) diriger un écoulement dudit fluide de nettoyage depuis ledit premier réservoir (20) vers ledit pare-brise (11) et à travers lesdits gicleurs (16, 17) ;
ii) diriger un écoulement de fluide d'antigivrage/de dégivrage depuis un deuxième réservoir (35) vers ledit pare-brise (11) et à travers lesdits gicleurs (16, 17) ;
iii) commuter une vanne (60) entre :
une première configuration de fonctionnement dans laquelle elle relie fluidiquement un premier conduit (51) relié audit premier réservoir (20) et un deuxième conduit (55) relié fluidiquement auxdits gicleurs (16, 17), et isole fluidiquement un troisième conduit (52) relié audit deuxième réservoir (35) et audit deuxième conduit (55) ; et
une deuxième configuration de fonctionnement dans laquelle elle isole fluidiquement lesdits premier et deuxième conduits (51, 55), et relie fluidiquement lesdits troisième et deuxième conduits (52, 55) ;
iv) commander une pompe (65) interposée le long dudit deuxième conduit (55) pour faire avancer ledit fluide de nettoyage ou ledit fluide d'antigivrage/de dégivrage présent, lors de l'utilisation, dans ledit deuxième conduit (55) ; et
v) chauffer lesdits essuie-glaces (14, 15) et lesdits gicleurs (16, 17), et éviter leur blocage ;
**caractérisée en ce qu'**elle comprend les étapes consistant à :
vi) générer, au moyen dudit capteur (85), un signal associé à la présence de glace sur ledit pare-brise (11) ; et
vii) commuter ladite vanne (60) de ladite première configuration vers ladite deuxième configuration, lorsque ledit signal est généré.

7. Méthode selon la revendication 6, **caractérisée en ce qu'**elle comprend une étape viii) consistant à générer ledit signal également associée au fait que la température de l'environnement entourant ledit aéronef (1) est inférieure à une valeur seuil.
